Europäisches Patentamt

European Patent Office

Office européen des brevets

(11) Publication number: **0 431 816 A1**

## EUROPEAN PATENT APPLICATION

(21) Application number: **90312874.2**

(51) Int. Cl.⁵: **H04N 7/173**

(22) Date of filing: **27.11.90**

(30) Priority: **04.12.89 GB 8927344**

(43) Date of publication of application:
**12.06.91 Bulletin 91/24**

(84) Designated Contracting States:
**BE ES FR GB NL**

(71) Applicant: **CABLETIME LIMITED**
**Newbury Business Park, London Road**
**Newbury, Berkshire RG13 2PZ(GB)**

(72) Inventor: **Smart, Daniel Henry**
**26 Monksdene Gardens**
**Sutton, Surrey, SM1 3BY(GB)**

(74) Representative: **Atkinson, Ralph et al**
**Fitzpatricks Europe House World Trade**
**Centre**
**London E1 9AA(GB)**

(54) Cable television networks.

(57) A cable television network of the switched-star type is shown, in which individual television channels are supplied to subscriber's terminal equipment (36) via switching nodes (33). The switching nodes are controlled in response to switch control signals, supplied from a remote control node, wherein each control node supplies switch control signals to a plurality of switching nodes. Channel selection data is supplied from the terminal equipment to the control nodes over the respective drop cable (35), the switching node (33) and the trunk cable (31). Switch control signals are supplied back to the switching nodes over the trunk cable. Control nodes may also be added to a previously wired tree and branch network, giving said network the operating characteristics of switched star network.

FIG.3

EP 0 431 816 A1

# CABLE TELEVISION NETWORKS

The present invention relates to cable television networks, of the type comprising a trunk cable, for transmitting a plurality of multiplexed television channels and a plurality of terminal units, each arranged to selectively receive television channels.

In a switched type of television network, switching, to select a channel, occurs remotely from the terminal equipment, at switching points, often referred to as hubs or nodes. A television network o this type is disclosed in United States Patent No. 4,302,771 in which each exchange receives multiplexed channels over two trunks. A major problem in the design of such networks is the calculation of the optimum number of subscribers to be connected to each node. In known systems, each node includes both dedicated hardware, relevant to only one subscriber and hardware which is common to all of the subscribers connected to that node. The problem arises because optimum use of cable and transmission power is made if the number of subscribers connected to a hub is small because the overall length of cable used is reduced. However, optimum use of common equipment is made if the number of connections is large because more subscribers may make use of each set of common equipment.

It is an object of the present invention to provide an improved cable television network.

According to the present invention, there is provided a cable television network of the aforesaid type, characterised in that, the full multiplex of television channels, transmitted via said trunk cable, is supplied to each of a plurality of switching nodes; channels selected by a terminal unit are supplied to said terminal unit by a switching node, in response to switch control signals; and switch control signals are supplied to a plurality of switching nodes from a common control node, in response to channel selection data supplied to said control nodes from said terminal units.

The invention will now be described by way of example only with reference to the accompanying drawings, of which:

Figure 1 illustrates a conventional tree and branch type cable television network;

Figure 2 illustrates a conventional star type cable television network;

Figure 3 shows a cable television network of the type illustrated in Figure 2, embodying the present invention; and,

Figure 4 shows a cable television network of the type shown in Figure 1, embodying the present invention.

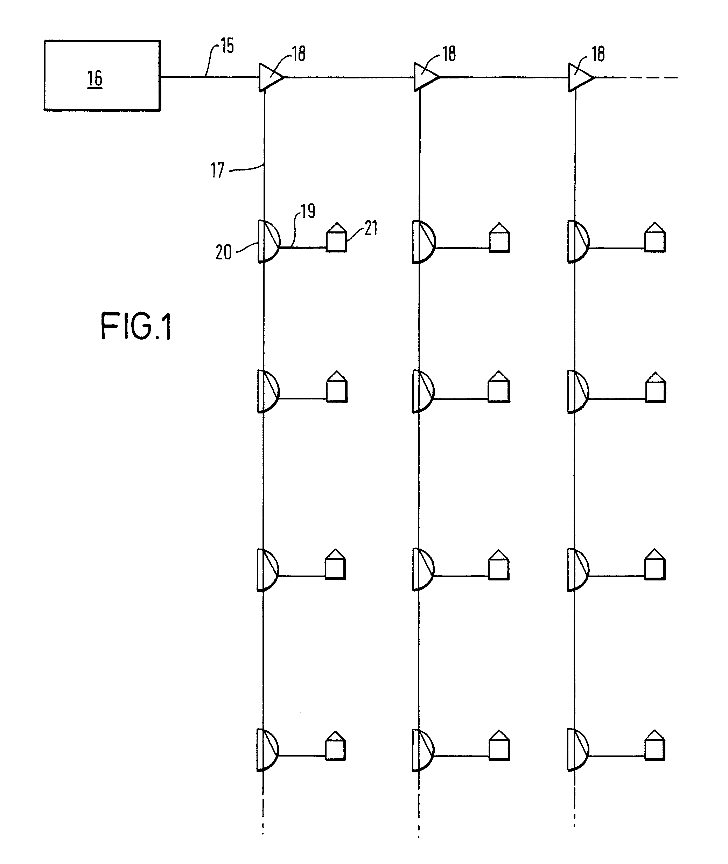

An example of a conventional "tree and branch" type cable television network is shown in Figure 1, in which all of the available programme signals are supplied to all of the subscribers. Television signals, in the form of a frequency multiplex, are supplied to a trunk cable 15 from a central distribution centre 16, commonly referred to as the "head end". The trunk cable ("tree") may travel for several kilometres in length and a plurality of such trunks may be supplied from a head end, running in different directions throughout the area of coverage. The signals are supplied to secondary cables ("branches") 17 via wide-band amplifiers 18, from which drop cables 19 are derived, via taps 20, to supply all of the signals to each of a plurality of subscribers 21.

Thus, it can be seen that the tree and branch type network is analogous to broadcasting by electromagnetic (EM) propagation and was generally developed in areas where off-air reception was of poor quality or not available. In addition, it may provide a wider bandwidth than that available to EM broadcasters, leading to greater programme choice. However, a problem with the tree and branch network is that it does not facilitate the ability to restrict viewing to some subscribers of, say, pay channels, therefore, such channels must be encoded (scrambled), with only paid-up subscribers having the means for unscrambling the encoded signals.

The scrambling and de-scrambling of television signals requires additional hardware, adding to the cost of the system, and may degrade picture quality. Picture degradation has become particularly pertinent in recent years given that cable systems must compete with very high quality direct broadcasting by satellite. There is also a risk that unauthorised users may de-scramble the picture without making the necessary payment, fuelling the design towards greater scrambling sophistication, which in turn leads to greater signal degradation and higher equipment cost.

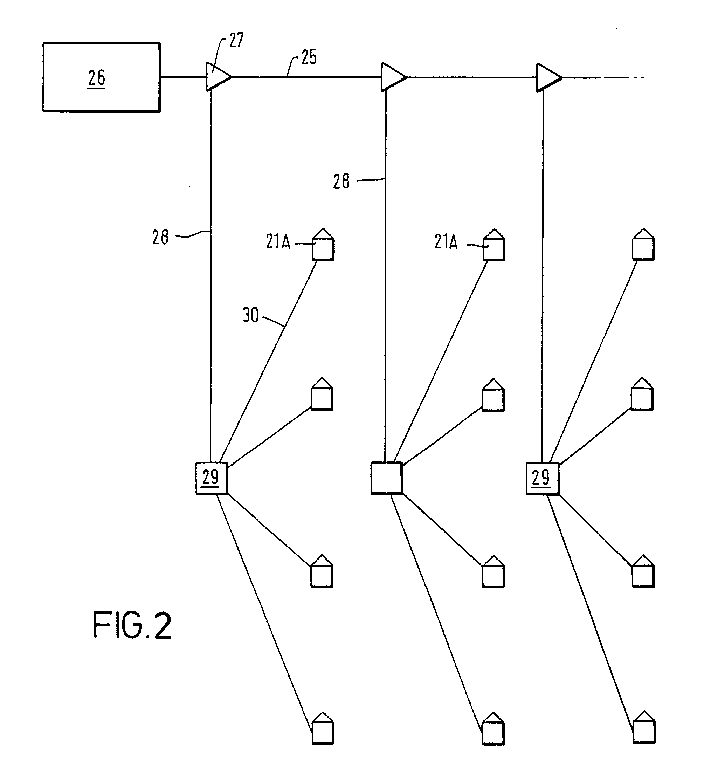

A network topology, designed with the aim of overcoming the disadvantages of the tree and branch type system, is shown in Figure 2 and is commonly known as a "star" type network. Like the tree and branch network, trunk cables 25 extend from a head end 26 via a series of wide-band amplifiers 27. At each amplifier 27, a secondary cable 28 splits away from the trunk but, rather than being tapped off to supply drop cables directly, the secondary cables supply the full bandwidth of signals to distribution hubs 29, from which drop cables 30 are then supplied to subscribers 21A. The hubs 29 include filters which may be activated to restrict the number of channels supplied to individual subscribers. Thus, pay channels may be placed with a particular range of transmission frequencies, which may only be supplied to a subscriber if that subscriber has made the necessary payment.

A further development, based on the star topology, is the switched star network, in which the hubs contain switches, controlled by the subscriber, which are arranged to select one of the many available programmes supplied on the trunk 25 and to supply just that one selected program onto the subscribers drop cable 30. Thus, in the switched star network, a substantial saving is made by the fact that the bandwidth of the drop cables 30, making up a very large proportion of the total cabling of the network, may be significantly reduced. Operational improvements may also be made because the system "knows" when a channel is being viewed, thus, viewers may be charged for what they actually view, without committing themselves in advance, as required by scrambled cable systems and satellite systems. The provision of means for transmitting data back from subscribers to the head end also facilitates two-way communication for other purposes, such as polling, ordering goods and services or even the transmission of data between individual subscribers, via the upstream equipment.

The switched star type network appears to provide a more sophisticated service, however, the trade-off for being able to use less expensive cable and not requiring scrambling means, is that more hardware is required in the form of control electronics, to perform the switching function.

In a typical switched cable television network, a selected programme channel is supplied over the drop cable at a frequency which may be received by a conventional television receiver, thereby reducing the requirement for additional demodulating equipment at the subscriber's end. Additional switched, or non-switched channels may also be carried by the drop cable, by frequency division multiplex, while still maintaining the bandwidth requirement of the drop cable significantly below that of the trunk cables.

At a switching node 29, a selected channel is obtained from the trunk 28, or one of the trunks in a multi-track system, and placed on the selecting subscribers drop cable 30 at the predetermined frequency. The operation of a switch in this way is referred to herein as the primary switching function, that is to say, in response to a switch control signal, a programme signal is selected and supplied onto a drop cable 30. In addition to the primary switching function, secondary functions are also performed, which may be summarised as follows:

a) Generating the switch control signal,

b) Relaying channel selection data back to the head-end, and

c) Providing additional services.

A cable television network requires a significant data processing capability, therefore, a computer is provided at the head-end 26, however, even with relatively small networks, the head-end computer does not directly control all of the activities of the network, therefore, in known switched-star networks, a significant amount of the processing power is provided at the switching nodes 29.

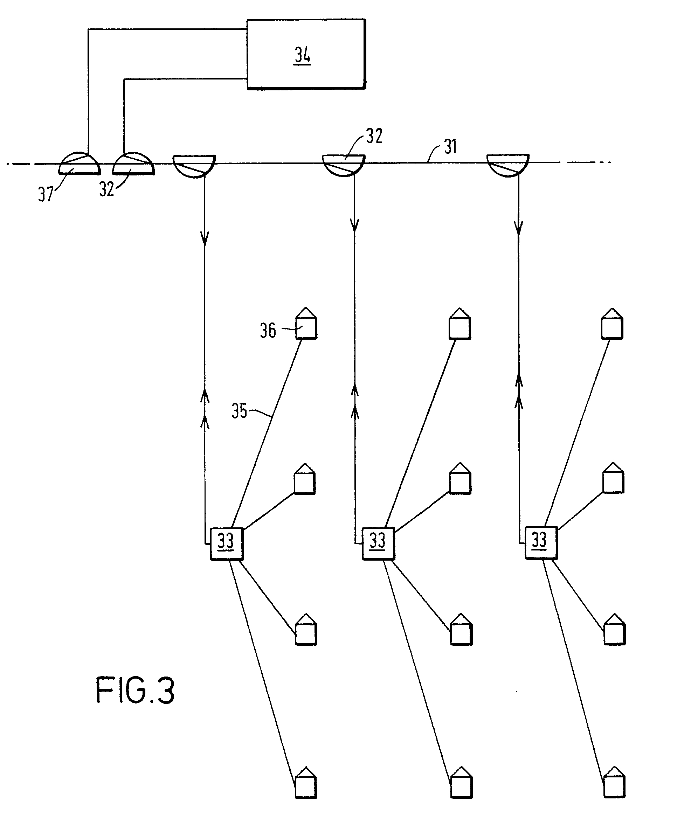

A cable television network, of the switched star type and embodying the present invention, is shown in Figure 3, in which elements for performing the switch control function are not located at the switching points and are, therefore, separated from the primary switching elements. A trunk cable 31, or a plurality of such cables, carries the full multiplex of available signals through taps 32, which in turn supply said signals to switching nodes 33, as in conventional systems, and, in addition, also supplies the multiplex to separate control nodes 34. The control nodes contain the distributed processing power, each control node 34 includes the control electronics to control not just one, but a plurality of switching nodes 33.

Subscriber's drop cables 35 convey selected signals to the subscriber's terminal equipment 36 and each switching node includes a switching device for each subscriber connected thereto, arranged to select a channel from the trunk and place it on its respective drop cable, in response to a switch control signal thus performing the primary switching function. Control signals and selection signals are conveyed over the network via data channels, provided by multiplexing data signals onto the trunk or drop cables, using suitably tuned modulating and demodulating devices (modems).

Channel selection is made by subscribers, often using hand-held remote control units and the subscriber's terminal equipment 36 includes means for storing an indication of a selected channel, until said means is polled by its respective control node 33; many polling cycles take place each second, ensuring that no noticeable delay occurs between channel selection and the selected programme being supplied to the subscriber. In the network of Figure 3, polling is initiated by the control nodes 34, working independently and simultaneously. During a polling cycle, a control node 34 polls all of the subscribers terminal equipment 36 connected to all of its respective switching nodes 33. On being given an opportunity to send channel selection data, a terminal equipment 36 sends said data to its switching node, which in turn relays said data to its control node, without any signal processing occurring at the relaying switching node 33. At the control node, the data from the terminal equipment 36 is received, and the particular subscriber is identified by said subscriber's particular time slot.

Thus, the data channel is provided by frequency division multiplex and data on that channel is divided, on a subscriber basis, by time division multiplex.

The control nodes are programmed by the head end, with data relating to the programmes available to each subscriber, thus, in a typical network, a plurality of levels of service may be available. The control nodes 34 determine whether a selected channel is available to a selecting subscriber and generate suitable control signals for the switching nodes 33. The control nodes include means for providing communication, over an additional frequency channel, via a tap 32, to their respective switching nodes 33, by means of unique address codes. The additional channel is used for supplying switching control signals (and access denied signals) to the switching nodes, for each subscriber connected thereto.

In addition to being connected to the trunk 31 via a tap 32, the control nodes 34 are also connected to said trunk via a tap 37. The control nodes 34 include suitably tuned modems, allowing them to communicate, via taps 37, with the head-end computer. A control node may be considered as controlling a set of subscribers, divided into a plurality of sub-sets, with each sub-set having its own respective switching node.

In operation, the head-end computer 26 supplies subscriber access data to each control node 34, wherein, each control node receives access data for its respective set of subscribers. A subscriber 36 selects a channel and the channel selection data is transferred to a control node 34, via a switching node 33, in response to a polling signal from the control node. In a polling cycle, having a period of less than one second, the control nodes 34 poll all subscribers in their set. On receiving channel selection data, a control node 34 consults access data from local memory, to determine whether the selecting subscriber may have access to the selected channel and, if so, the control node sends a switch control signal to the switching node 33, having the selecting subscriber in its sub-set, thereby supplying the selected channel to the selecting subscriber.

Channel selection data is stored at the control nodes, comprising a list, for each subscriber in its set, of all channels viewed and for how long. Over suitable intervals, say on a daily basis, the head-end computer polls the control nodes one-by-one, so that the control nodes may down-load channel selection data to the head-end computer. Thus, communication between subscriber terminal equipment, switching nodes and control nodes may be considered to take place in real-time, while communication between the control nodes and the head-end computer takes place under the control of the head-end computer. The head-end computer is, therefore, relieved of performing any real-time control functions and is left to handle all of the non real-time data processing functions.

The advantages of the network topology shown in Figure 3 are very substantial because said topology improves the options available to the network designer, who must not only take account of supplying initial subscribers with a service but who must also make provision for satisfying customers who request the network at a later date the possibility of customers discontinuing their subscription, resulting in a switching device and its associated cable being tied-up, without the service supplier receiving subscription payments.

In designing an optimum switched star type system of the conventional type, a designer was faced with a dilemma. To reduce costs, control functions should be shared between as many subscribers as possible, encouraging the designer to use switching nodes with a large number of drop cables connected thereto. However, as the number of subscribers connected to a hub increases, the average length of the drop cables also increases, thereby increasing the cost of wiring up the network and also increasing the power requirement for transmitting signals over said cables. Thus, to reduce these costs, is it desirable to have a small number of subscribers connected to each hub, which in turn reduces the extent to which control equipment may be shared.

Experience has shown, that a good compromise is to provide switching nodes with up to sixteen subscribers connected thereto. However, by employing the network of Figure 3, switching nodes 33 may be economically configured with as few as four subscribers 36 connected thereto, because the amount of shared equipment at each switching node 33 is greatly reduced. However, using commercially available microprocessors, a control node 34 may provide control signals for a thousand, or even more, subscribers, without any noticeable deterioration in switching speed. Furthermore, by using the optimum length of drop cable 35, the quality of the programme signals supplied may be improved, while at the same time minimising power consumption.

So far, the only aspects of the system which have been considered are those of the basic function, that is, primary switching, switching control and channel selection. However, additional services may be provided which are not available to EM broadcasters, whether ground-based or satellite. Thus, provision may be made for supplying signals generated within the network itself or for storing pictures, which in turn requires the provision of text generators and frame stores. These are relatively expensive devices which could not, for commercial reasons, be provided, in known systems, at each switching node. However, with the ability to share a function between one thousand subscribers, the cost per subscriber becomes realistic if such devices are provided at the control nodes 34.

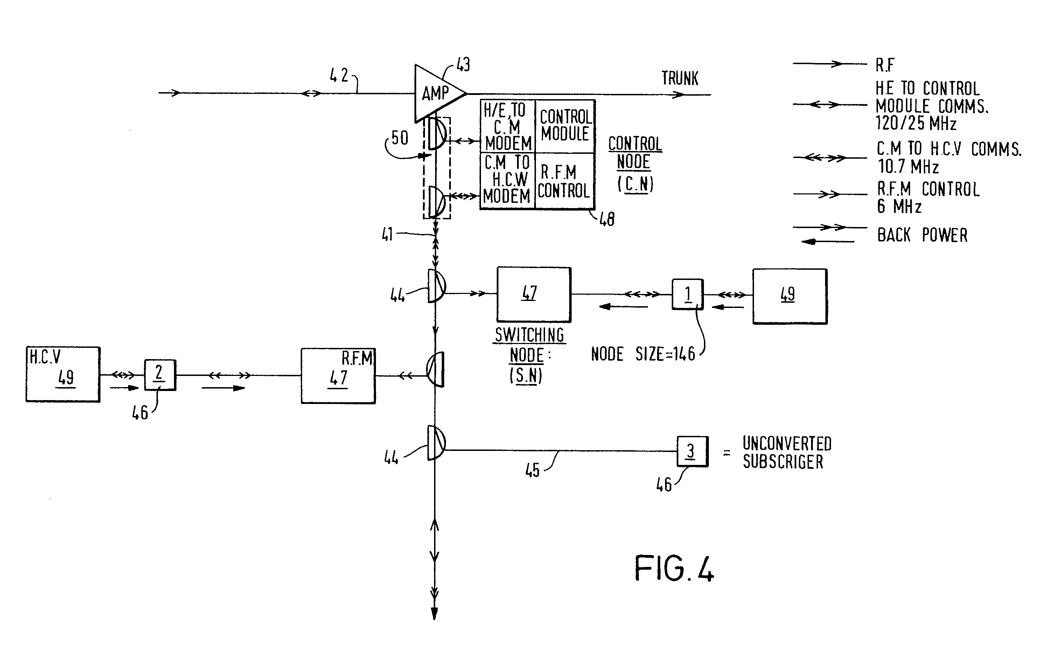

Part of a tree and branch network is shown in Figure 4, which has been modified in accordance with the present invention. A secondary cable 41 extends from a main trunk cable 42, via a wideband amplifier 43. Taps 44 are provided in the secondary cables which, for unconverted subscribers, supply a respective wide-band drop cable 45 to a subscriber 46. A subscriber is converted, in accordance with the present invention, by inserting a switching node 47 into the drop cable between the tap 41 and the subscriber's terminal equipment 46.

In addition to introducing switching nodes, a control node 48 is introduced between amplifier 43 and the first tap 44, arranged to supply switch control signals to the switching nodes 47, in response to channel selection data from a hand-held controller 49. The control node 48 also communicates with the head-end, via a suitably tuned modem and a tap 50. Thus the invention allows a network configured as a tree and branch to be modified to provide the logical functions of a switched star network, while retaining the original cable paths. Furthermore, not all subscribers need to be modified, as they may still receive the wide-band signal direct from the trunk.

**Claims**

1. A cable television network, comprising a trunk cable (31) for transmitting a plurality of multiplexed television channels; and a plurality of terminal units (36), each arranged to selectively receive said television channels:
   characterised in that, the full multiplex of television channels, transmitted via said trunk cable (31), is supplied to each of a plurality of switching nodes (33);
   channels selected via a terminal unit (36) are supplied by a respective switching node (33) to said terminal unit, in response to switch control signals; and
   switch control signals are supplied to a plurality of switching nodes from a common control node (34), in response to channel selection data supplied to said control nodes (34) from the terminal units (36).

2. A network according to claim 1, wherein a plurality of control nodes (34) are connected to said trunk cable (31) and switch control data is supplied to said switching nodes (33) from a control node (34) via said trunk cable.

3. A network according to claim 2, wherein channel selection signals are supplied to said control nodes (34) from terminal equipment (36) via a drop cable (35) a switching node (33) and the trunk cable (31).

4. A network according to claim 2 or claim 3 in which switch control signals are addressed to a plurality of switching nodes over a common frequency channel.

5. A network according to any preceding claim, in which up to a thousand subscribers are controlled by a common control node.

6. A network according to claim 5, in which between 1 and 100 subscribers (forming a subset of said set) receive television channels from a common switching node.

7. A method of transmitting television signals over a cable network comprising the steps of:
   requesting a programme channel by means of a channels selector (36), and
   supplying channel selection data to a control node,
   characterised by:
   generating control data at said control node and selectively supplying said control data to one of a plurality of switching nodes, wherein said one selected switching node is connected, via a drop cable, to the selecting subscriber
   and, at said selected switching node, supplying the selected channel to the selecting subscriber.

8. A method of transmitting television signals according to claim 7, characterised by generating polling signals at said control nodes and applying a polling signal to each subscriber in turn during a cycle, wherein subscribers supply data to said control nodes after being polled.

9. A method of transmitting television signals according to claim 7 or claim 8, characterised in that selection data is supplied to said control nodes via said switching nodes.

10. A method of transmitting television signals according to any of any claims 7 to 9, characterised by interrogating said control nodes to supply viewing data to a head-end computer.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 505 523   (AM CABLE TV INDUSTRIES, INC.) <br> * Page 3, line 1 - page 4, line 5; page 4, line 27 - page 5, line 20 * | 1,2,4-8, 10 | H 04 N 7/173 |
| A | US-A-4 302 771   (GARGINI) <br> * Column 2, line 64 - column 3, line 41 * | 1,5-7 | |

|  |  |
|---|---|
| | TECHNICAL FIELDS SEARCHED (Int. Cl.5) |
| | H 04 N 7/00 |

The present search report has been drawn up for all claims

| Place of search | Date of completion of search | Examiner |
|---|---|---|
| The Hague | 13 March 91 | HAZEL J.F. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document